(19) Europäisches Patentamt / European Patent Office / Office européen des brevets

(11) **EP 2 023 279 A1**

(12) **EUROPEAN PATENT APPLICATION**

(43) Date of publication:
**11.02.2009 Bulletin 2009/07**

(51) Int Cl.:
***G06Q 10/00*** *(2006.01)*

(21) Application number: **07014545.3**

(22) Date of filing: **24.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **SIEMENS AKTIENGESELLSCHAFT 80333 München (DE)**

(72) Inventor: **Zaid, Farid 64347 Griesheim (DE)**

(54) **A method and an apparatus for maintaining a quality of service of a business process**

(57) The invention provides a method and an apparatus for maintaining a quality of service (QoS) of a business process (BP) during execution of a corresponding business process execution language (BPEL) script of said business process by a BPEL-engine (1), wherein if said quality of service (QoS) does not fulfill a predetermined quality of service specified in a binding element of said BPEL-script a rebinding strategy to fulfill the predetermined quality of service is applied as specified in a rebinding element of said BPEL-script.

# FIG 4

**Description**

The invention relates to a method and an apparatus for maintaining a quality of service QoS of a business process BP during execution of a corresponding business process execution language BPEL-script of the business process by a BPEL-engine.

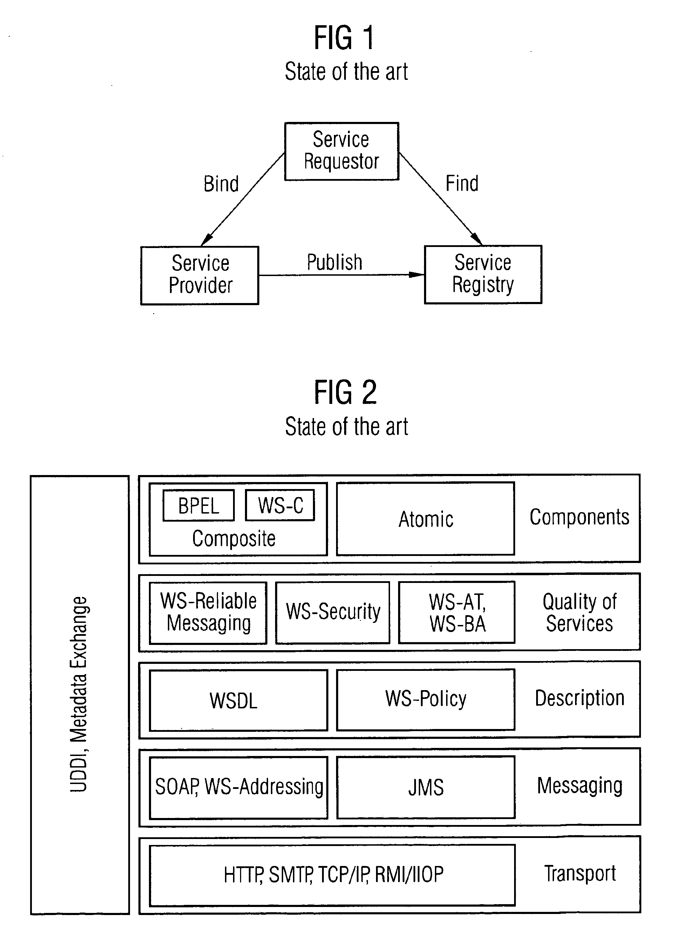

The business process execution language BPEL is an executable business process modeling language. The business process execution language describes and executes service oriented architecture SOA applications. A service orientated architecture SOA as shown in figure 1 makes use of services available in a network such as the World Wide Web. The service oriented architecture SOA is a way of sharing functions, typically business functions in a widespread and flexible way. A service provider offers services including details which allow any users who intends to use the service to bind to it in an appropriate way. The service provider publishes detailed information about service functionalities and how the service can be accessed in order to make it available to potential service users. The information is, for instance, represented in form of meta-data and published in a directory or a registry. The service registry offers discovery facilities and appropriate interfaces such that a service requestor can find services that he is interested in and to select these services. The directory can be formed by a universal description discovery integration directory (UDDI).

A webservice is a service available via a network for conducting transactions. A distributed computer system enhances information sharing, mobile communication and e-business. Each webservice has an interface to describe his service in a machine readable form such as the webservice description language WSDL.

Figure 1 shows the principle of a service orientated architecture SOA according to the state of the art. A service requestor who wishes to discover and use a webservice of a service provider searches an appropriate webservice by surfing through a service registry. When the service requestor has found an appropriate webservice he can access the found webservice.

Figure 2 illustrates a webservice protocol stack including current standards and emerging standards for webservices.

The bottom layer of the webservice stack presents various transport protocols supporting the communication between a service and a requestor. A messaging layer on top of the transport layer provides abilities to handle messages of different types wherein SOAP and WS addressing present a support of XML based messaging and IMS presents non XML messaging. The description layer on top of the messaging layer uses WSDL to support and deal with functional service description and binding mechanisms. The quality of service QoS delivered and supported by the webservice architecture itself resides in the next layer i.e. in the quality of service layer. This layer deals with security aspects such as integrity and confidentiality of messages. In order to support coordination i.e. orchestration, of webservices for a business process composed from several webservices, the webservices architecture as shown in figure 2 uses a component layer residing on top of the webservice stack. The business process execution language BPEL has become the de facto standard to describe and execute SOA applications. XML (Extendible Markup Language) provides a syntax for a webservice and defines the universal form for the representation and transmission of structured data in a manner that is independent from any particular hardware, software, file system, calculating or programming language.

The main functions of XML are interapplication, communication, data integration and external application communication with outside partners.

A network quality of service QOS refers to the capability of a network for providing required services to the selected network traffic over various technologies such as ATM, Ethernet, Sonnet and IP-related networks. The network may use any or all of these underlined technologies. Dedicated bandwidth a control jitter and latency required by some realtime and interactive traffic along with improved loss characteristics are the main quality of service parameters.

The business process execution language (BPEL) is an orchestration language not a choreography language. While BPEL is a standard that executes BPEL - scripts the engines that execute BPEL are themselves not standardized. A BPEL engine implementation is proprietory and mechanisms used to support a adaptable BPEL behavior are not portable to other BPEL-engines.

A business process BP encoded in a BPEL-script which is executed by BPEL engine step by step can at each step invoke a service from a remote webservice provider. The webserver of the webservice provider receives the invocation from the BPEL engine and returns a result to the BPEL-engine. When a business process BP invokes a webservice it may happen that an invocation of the webservice fails. With a local time counter it can be monitored how long it takes to receive a response from a remote webservice server in reaction to an invocation by the BPEL-engine. A quality of service (QoS) parameter is the execution time for executing an application run by the BPEL engine. The longer it takes to receive the responses from the invoked webservice provider the longer is the execution time of the executed business process, i.e. the quality of service QoS decreases.

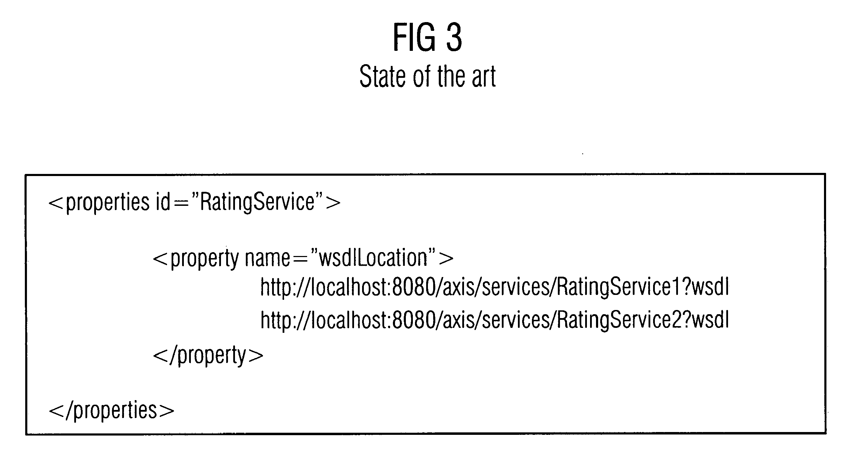

To handle an adaptability of the system to a degraded quality of service QoS the BPEL process manager of Oracle provides a so called failover mechanism as shown in figure 3. The conventional failover mechanism of oracle allows multiple webservices to be configured as a backup for a given webservice type. If a failure or fault occurs during executing of a BPPL script, during running of the composite webservices then one of these backup services is retried.

Figure 3 shows an exemplary failover mechanism for a Rating Service. If an invoked webservice fails the BPEL-script switches to another backup webservice. The failover mechanism has several severe disadvantages. As a disadvantage the backup services are specified at design time and are hard-coded in the process descriptor file. As a consequence if the provided backup services themselves fail the whole application is down. Moreover if further improved candidate services appear at runtime they are not considered as main or backup services because of the static assignment at design time. As a further disadvantage, if the business terms or application requirements change with the conventional failover mechanism the process descriptor has to be reedited. This means that the whole BPEL application has to be stopped while the updated descriptor is implemented. This forms a severe disadvantage for these BPEL applications which involve long running business processes.

Accordingly it is an object of the present invention to provide a method in a system to handle in a flexible manner a change of a quality of service.

The invention provides a method for maintaining a quality of service QoS of a business process during execution of a corresponding business process execution language script of said business process by a BPEL engine,
wherein if said quality of services does not fulfill a predetermined quality of service QoS specified in a binding element of said BPEL-script a rebinding strategy to fulfill said predetermined quality of service is applied as specified in a rebinding element of said BPEL-script.

The quality of service QoS is an end-to-end QoS not only a network QoS.

In an embodiment of the method according to the present invention the binding element is a XML element comprising

a binding keyword,
a selection policy attribute and
an optimization attribute.

In an embodiment according of the method to the present invention the rebinding element is a XML element comprising

a rebinding keyword,
an enable attribute, and
a rebinding strategy attribute.

In embodiment of the method according to the present invention the rebinding strategy attribute indicates a rebinding strategy comprising a set of rules applied to fulfill as far as possible said predetermined quality of service.

In an embodiment of the method according to the present invention the binding element and the rebinding element are contained in a main construct.

The invention further provides an apparatus for maintaining a quality service of a business process during execution of a corresponding business process execution language BPEL-script of the business process by a BPEL engine,
wherein if said quality of service QoS does not fulfill a predetermined quality of service specified in a binding element of the BPEL-script, a rebinding strategy to fulfill the predetermined quality service is applied as specified in a rebinding element of said BPEL-script.

In an embodiment of the apparatus according to the present invention the apparatus is formed by a BPEL engine of a business process provider.

The invention further provides a system for maintaining a quality service of a business process during execution of a corresponding business process execution language BPEL-script of said business process by a BPEL engine, wherein said BPEL engine applies a rebinding strategy to fulfill a predetermined quality of service QoS as specified in a rebinding element of the BPEL-script if the quality of service does not fulfill a predetermined quality of service specified in a binding element of the BPEL-script.

In the following embodiments of the method and system according to the present invention are described with reference to the enclosed figures.

Figure 1    is a diagram for illustrating a service oriented architecture SOA according to the state of the art;

Figure 2    shows a webservice protocol stack according the state of the art;

Figure 3    shows an example for a failover mechanism according to the state of the art;

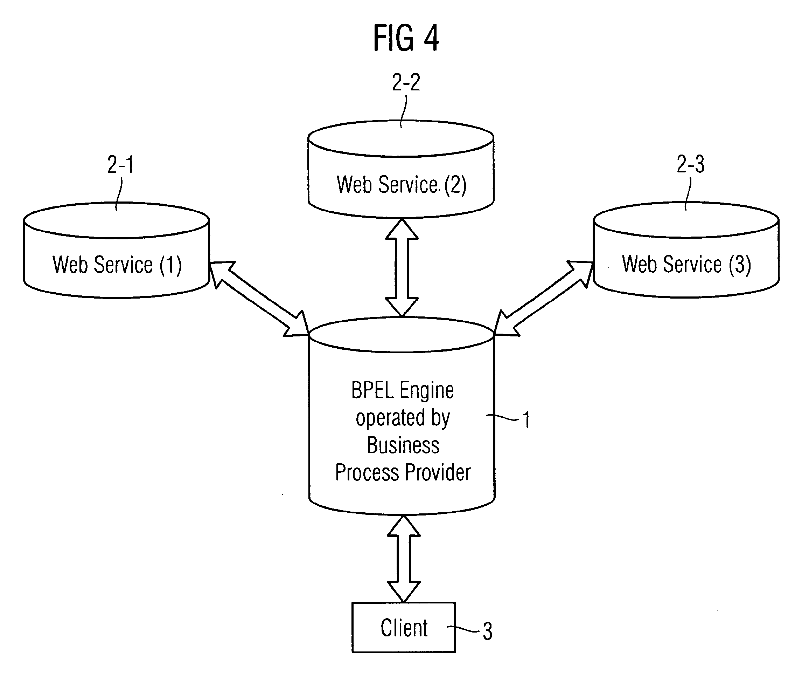

Figure 4     shows an example for a system for maintaining a quality of service according to an embodiment of the present invention;

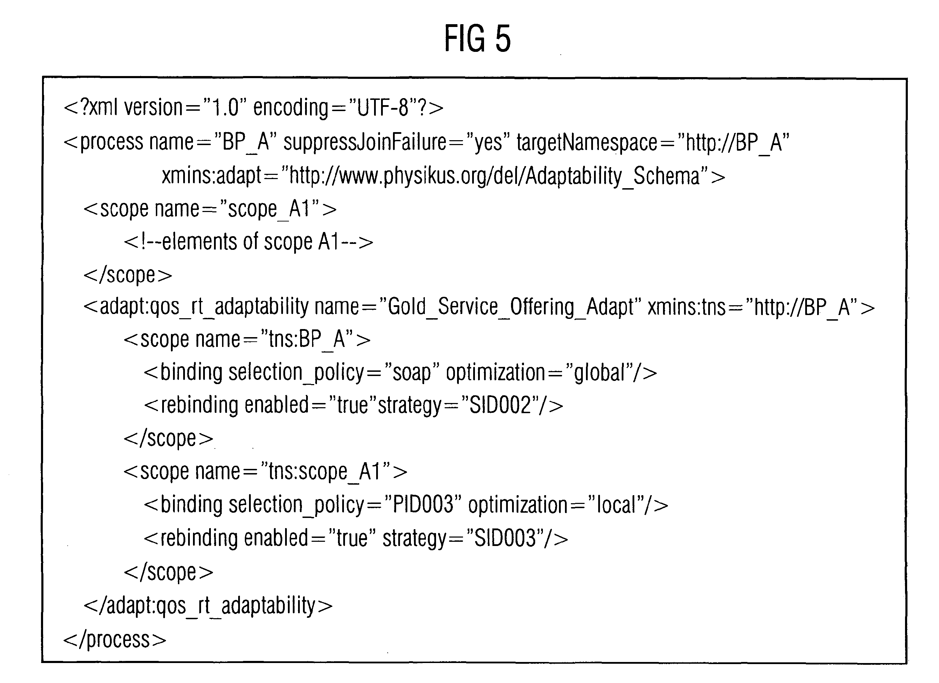

Figure 5     shows an example for BPEL-script comprising a binding or rebinding element as employed by the method and system according to the present invention;

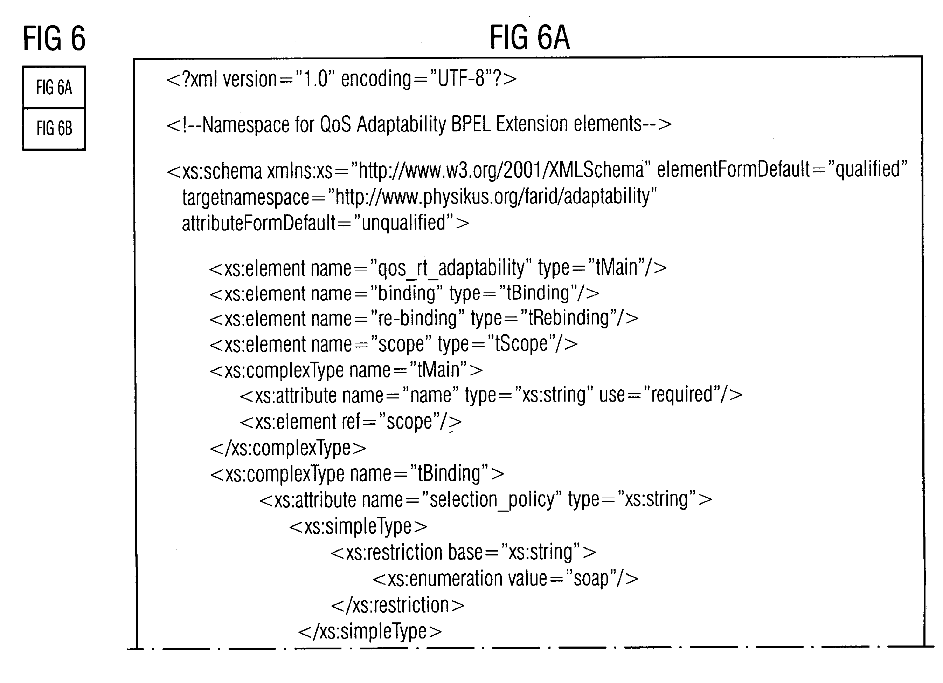

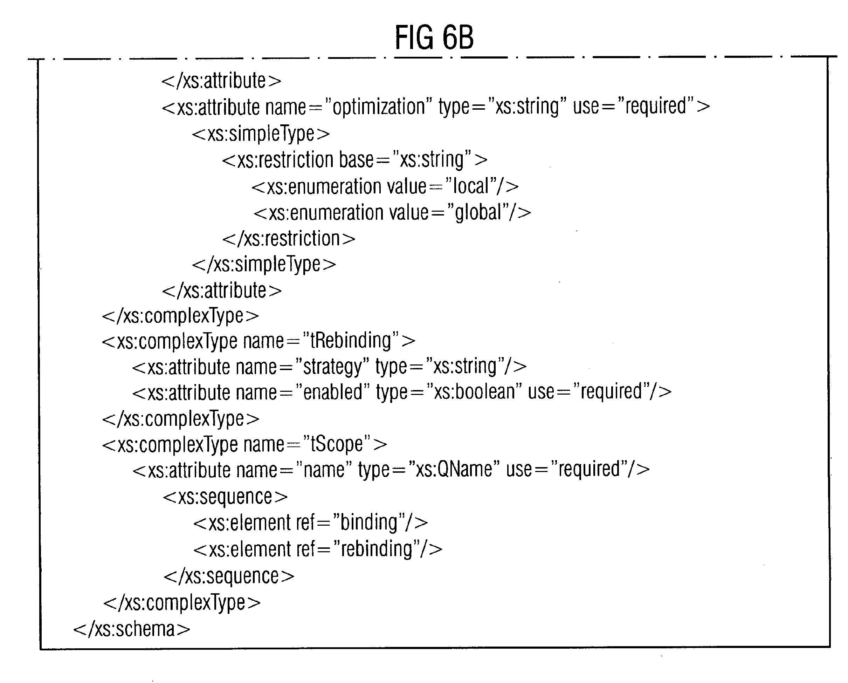

Figure 6     shows an example for keyword definition by a XML scheme for the keywords used for binding and rebinding elements of figure 5;

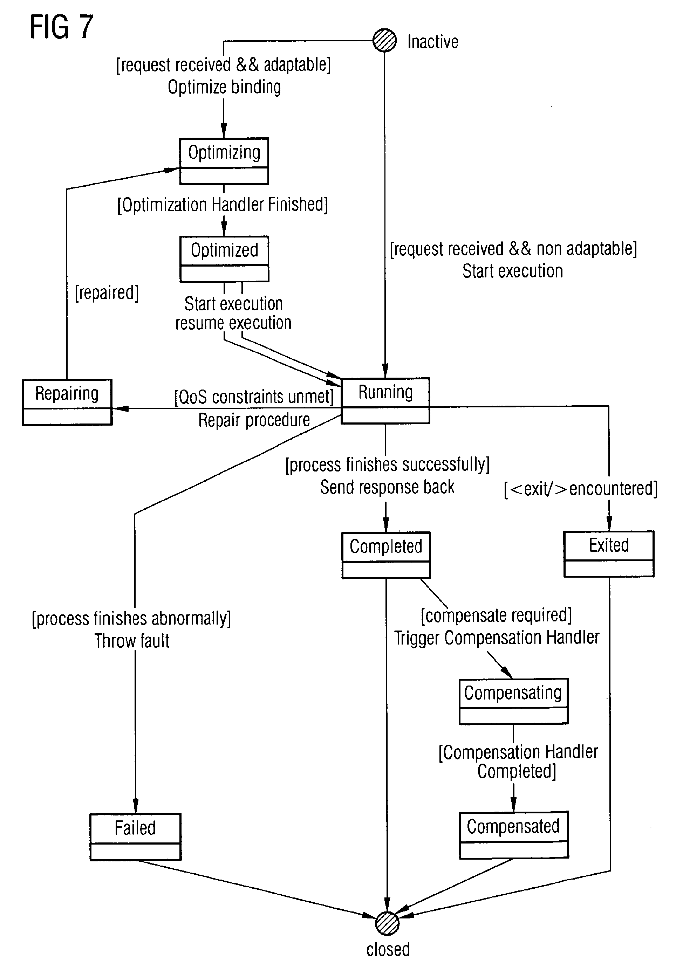

Figure 7     shows a flowchart for the execution of a BPEL application according to an embodiment of the present invention.

As can be seen in figure 4 a BPEL engine 1 is connected to different servers 2-1, 2-2, 2-3 each offering a corresponding webservice WS1, WS2, WS3. The BPEL engine 1 can be operated by a business process provider. On the BPEL engine 1 a business process execution language BPEL-script is executed. During execution of the BPEL-script webservices offered by other webservice providers can be invoked from servers such as the application servers 2-1, 2-2, 2-3 via a network such as the internet. The BPEL engine 1 sends a request to an application server over the network and gets a response. The BPEL engine 1 is connected to at least one client computer 3. The client computer 3 is also connected via a network to the BPEL engine 1. The BPEL engine 1 receives a request from the client 3 and interacts with the webservices of the servers 2-1, 2-2, 2-3 to execute the business process. After execution of the BPEL-script the BPEL engine 1 sends back a response to the client computer 3.

Figure 5 shows an example of a passage within a BPEL-script run by the BPEL engine 1 as shown in figure 4. The BPEL-script shown in figure 5 comprises BPEL extensions to provide a universal adaptability to changes of a quality of service QoS level. The QoS server is an end-to-end QoS not only a network QoS. For example a response time of a service is actually the sum of the network delay and the time it takes the service provides to process the request.

The BPEL passage which is shown in figure 5 is written in XML language. The XML document comprises one root element (process) proceeded by an XML declaration to state what version of XML is in use (Version = "1.0"). The XML declaration also contains information about character encoding.

The text enclosed by the root text contains a number of XML elements having a predetermined syntax:

```
<name attribute = "value"> content </name>.
```

A XML namespace (xmlns) indicates extension elements.

The BPEL scope is formed by a collection of activities that can have its own local variables, exception handling, compensation etc. This provides means to manage a complex flow of the business process to hierarchically organized parts or scopes. In the example of figure 5 the business process has a scope named "scope A1" having its own elements (not shown). The use of the contents of scope is part of the extension elements to provide different adaptability parameters for the different scopes of the business process BP. It can be seen from figure 5 that it is referred to scope A1 and binding and rebinding values for that scope. As can be seen from figure 5 the main construct having the name "qoS_rt_adaptability" forms an extension element containing a binding element and a rebinding element. Keywords of the extension element are defined in a XML schema as shown in figure 6.

The binding element shown in figure 5 in the main construct qoS_rt_adaptability comprises a binding keyword, a policy quality attribute and an optimization attribute.

The rebinding element within the main construct qoS_rt_adaptability comprises a rebinding keyword, an enable attribute and a rebinding strategy attribute. The rebinding strategy attribute of the rebinding element indicates a rebinding strategy comprising a set of rules applied to fulfill as far as possible a predetermined quality of service QoS.

In the given example of figure 5 the binding keyword of the binding element is "binding" and an attribute for the selection of a policy has the value "SOAP" indicating a protocol format. A further attribute of the binding element is the optimization attribute having the value "global". The optimization attribute defines how the quality of service QoS of the business process BP is optimized. This optimization attribute has either of two values: "local" or "global". The value "local" indicates that for each task in the BPEL process a best available webservice is chosen or selected to execute that task. The value "global" means that the overall quality of service QoS of the BPEL process has to be optimized. The value "global" has as a consequence that an optimization of the overall quality is performed but the quality of each task is not necessary optimized if the value "global" is indicated.

The rebinding element has as a rebinding keyword the word "rebinding". The rebinding element further comprises an enable attribute. The enable attribute has the value "true" or the value "false". The value "true" significates that in case that the quality of service QoS deteriorates during execution then some procedures are performed to repair the quality of service QoS as far as possible.

The rebinding element further comprises a rebinding strategy attribute having in the given example the value "SID002". The rebinding strategy attribute comprises a set of rules applied to fulfill a predetermined quality of service QoS, i. e. ent-to-end QoS. The strategy attribute specifies what rules or procedures are to be performed to repair the quality of service QoS. The strategy attribute has as a value a reference number of a strategy to be employed. The rules can have different forms depending on the implementation of the rebinding element. In an embodiment the rules are executed by an other module which is external to the BPEL engine. If the Quality of service QoS has not fulfilled a predetermined quality of service QoS specified by the binding element in BPEL-script as shown in figure 5 a rebinding strategy to fulfill the predetermined quality of service QoS is applied as specified in the rebinding element.

Accordingly the extension elements employed by the present invention allow an adaptive behavior of a business process BP at runtime i.e. during execution a certain quality of service level is maintained. It can be seen from the example of figure 5 that the adaptability is provided by extension elements within the BPEL-script itself. Accordingly with the method according to the present invention it is possible to handle a degraded quality of service QoS in a flexible manner as defined by the XML extension elements in the BPEL-script executed by the BPEL engine 1. This approach is platform neutral and extremely flexible. It is possible for application designers to specify a need for adaptability and to describe parameters desired for an adaptive behavior in the same BPEL-script as used by the application description. A BPEL engine 1 can support this adaptability when it is able process the extension elements. This does not impose any specific mechanism to fulfill the semantics intended for the adaptability extensions.

Any optimization technique can be used to provide a semantic for the optimization attribute of the binding element. In a similar manner a rebinding strategy specified in the rebinding element can be implemented in different ways and different technologies. For example artificial intelligent algorithms can be employed. The method for maintaining a quality of service QoS for business process BP allows to maintain an optimal quality of service QoS level even at runtime. A webservice candidate can be considered at runtime and the rebinding strategy can be modified again and again to meet evolving business terms. This can performed at runtime of the business process without stopping the BPEL application.

Figure 7 shows a flowchart for illustrating the execution of the BPEL application. In an initial state a process is in inactive and waits for a request from a client. When the business process receives the request the business process BP starts and invokes webservices. If the quality of service QoS falls under a predetermined quality of service level the business process starts a quality of service QoS repairing procedure. In the repairing procedure the rebinding element is processed for performing an optimization. The running process can either be completed or aborted in response to a exit condition. The business process can also be closed as failed.

As can be seen from figure 7 when running a business process on a BPEL engine 1 having a BPEL-script with binding and rebinding elements according to the present invention an optimization loop is run through to adapt to degraded quality of service QoS within the network. The method and system according to the present invention allows to support an universal adaptability for a service oriented architecture (SOA) application using platform neutral extensions.

**Claims**

1. A method for maintaining a quality of service (QoS) of a business process (BP) during execution of a corresponding business process execution language (BPEL) script of said business process by a BPEL-engine (1), wherein if said quality of service (QoS) does not fulfill a predetermined quality of service specified in a binding element of said BPEL-script a rebinding strategy to fulfill the predetermined quality of service is applied as specified in a rebinding element of said BPEL-script.

2. The method according to claim 1, wherein said binding element is a XML element comprising:

   a binding key word,
   a selection policy attribute and
   an optimization attribute.

3. The method according to claim 1, wherein said rebinding element is an XML element comprising:

   a rebinding key word,

an enable attribute and
a rebinding strategy attribute.

4. The method according to claim 1,
wherein said rebinding strategy attribute indicates a rebinding strategy comprising a set of rules applied to fulfill said predetermined quality of service.

5. The method according to claim 1,
wherein said binding element and said rebinding element are contained in a main construct (qoS_rt_adaptability).

6. An apparatus for maintaining a quality of service (QoS) of a business process (BP) during execution of a corresponding business process execution language (BPEL) script of said business process by a BPEL-engine (1), wherein if said quality of service (QoS) does not fulfill a predetermined quality of service specified in a binding element of said BPEL-script a rebinding strategy to fulfill the predetermined quality of service is applied as specified in a rebinding element of said BPEL-script.

7. The apparatus according to claim 6,
wherein said binding element is a XML element comprising:

a binding key word,
a selection policy attribute and
an optimization attribute.

8. The apparatus according to claim 6,
wherein said rebinding element is an XML element comprising:

a rebinding key word,
an enable attribute and
a rebinding strategy attribute.

9. The apparatus according to claim 6,
wherein said rebinding strategy attribute indicates a rebinding strategy comprising a set of rules applied to fulfill said predetermined quality of service.

10. The apparatus according to claim 6,
wherein said binding element and said rebinding element are contained in a main construct (qoS_rt_adaptability).

# FIG 1
## State of the art

```
              Service
             Requestor
       Bind  /         \  Find
            /           \
      Service    Publish    Service
      Provider  ────────▶   Registry
```

# FIG 2
## State of the art

| UDDI, Metadata Exchange | BPEL   WS-C  Composite | Atomic | Components |
| | WS-Reliable Messaging | WS-Security | WS-AT, WS-BA | Quality of Services |
| | WSDL | WS-Policy | Description |
| | SOAP, WS-Addressing | JMS | Messaging |
| | HTTP, SMTP, TCP/IP, RMI/IIOP | Transport |

# FIG 3

State of the art

```
<properties id="RatingService">

        <property name="wsdlLocation">
                http://localhost:8080/axis/services/RatingService1?wsdl
                http://localhost:8080/axis/services/RatingService2?wsdl
        </property>

</properties>
```

EP 2 023 279 A1

# FIG 4

EP 2 023 279 A1

# FIG 5

```
<?xml version="1.0" encoding="UTF-8"?>
<process name="BP_A" suppressJoinFailure="yes" targetNamespace="http://BP_A"
         xmins:adapt="http://www.physikus.org/del/Adaptability_Schema">
  <scope name="scope_A1">
      <!--elements of scope A1-->
  </scope>
  <adapt:qos_rt_adaptability name="Gold_Service_Offering_Adapt" xmins:tns="http://BP_A">
      <scope name="tns:BP_A">
        <binding selection_policy="soap" optimization="global"/>
        <rebinding enabled="true"strategy="SID002"/>
      </scope>
      <scope name="tns:scope_A1">
        <binding selection_policy="PID003" optimization="local"/>
        <rebinding enabled="true" strategy="SID003"/>
      </scope>
  </adapt:qos_rt_adaptability>
</process>
```

EP 2 023 279 A1

# FIG 6

| |
|---|
| FIG 6A |
| FIG 6B |

# FIG 6A

```
<?xml version="1.0" encoding="UTF-8"?>

<!--Namespace for QoS Adaptability BPEL Extension elements-->

<xs:schema xmlns:xs="http://www.w3.org/2001/XMLSchema" elementFormDefault="qualified"
    targetnamespace="http://www.physikus.org/farid/adaptability"
    attributeFormDefault="unqualified">

    <xs:element name="qos_rt_adaptability" type="tMain"/>
    <xs:element name="binding" type="tBinding"/>
    <xs:element name="re-binding" type="tRebinding"/>
    <xs:element name="scope" type="tScope"/>
    <xs:complexType name="tMain">
        <xs:attribute name="name" type="xs:string" use="required"/>
        <xs:element ref="scope"/>
    </xs:complexType>
    <xs:complexType name="tBinding">
        <xs:attribute name="selection_policy" type="xs:string">
            <xs:simpleType>
                <xs:restriction base="xs:string">
                    <xs:enumeration value="soap"/>
                </xs:restriction>
            </xs:simpleType>
```

EP 2 023 279 A1

# FIG 6B

```
            </xs:attribute>
            <xs:attribute name="optimization" type="xs:string" use="required">
                <xs:simpleType>
                    <xs:restriction base="xs:string">
                        <xs:enumeration value="local"/>
                        <xs:enumeration value="global"/>
                    </xs:restriction>
                </xs:simpleType>
            </xs:attribute>
        </xs:complexType>
        <xs:complexType name="tRebinding">
            <xs:attribute name="strategy" type="xs:string"/>
            <xs:attribute name="enabled" type="xs:boolean" use="required"/>
        </xs:complexType>
        <xs:complexType name="tScope">
            <xs:attribute name="name" type="xs:QName" use="required"/>
                <xs:sequence>
                    <xs:element ref="binding"/>
                    <xs:element ref="rebinding"/>
                </xs:sequence>
        </xs:complexType>
    </xs:schema>
```

EP 2 023 279 A1

## FIG 7

Inactive

[request received && adaptable]
Optimize binding

Optimizing

[Optimization Handler Finished]

Optimized

[repaired]

[request received && non adaptable]
Start execution

Start execution
resume execution

Repairing

[QoS constraints unmet]
Repair procedure

Running

[process finishes successfully]
Send response back

[<exit/>encountered]

Completed

Exited

[process finishes abnormally]
Throw fault

[compensate required]
Trigger Compensation Handler

Compensating

[Compensation Handler
Completed]

Failed

Compensated

closed

**European Patent**
**Office**

## EUROPEAN SEARCH REPORT

Application Number

EP 07 01 4545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABDELKARIM ERRADI ET AL: "Recovery Policies for Enhancing Web Services Reliability" WEB SERVICES, 2006. ICWS '06. INTERNATIONAL CONFERENCE ON, IEEE, PI, September 2006 (2006-09), pages 189-196, XP031031557 ISBN: 0-7695-2669-1 * the whole document * | 1-10 | INV. G06Q10/00 |
| X | KARELIOTIS CHRISTOS ET AL: "Enhancing BPEL scenarios with Dynamic Relevance-Based Exception Handling" WEB SERVICES, 2007. ICWS 2007. IEEE INTERNATIONAL CONFERENCE ON, IEEE, PI, 9 July 2007 (2007-07-09), pages 751-758, XP031119985 ISBN: 0-7695-2924-0 * the whole document * | 1-10 | |
| X | MAXIMILIEN E M ET AL: "TowardWeb Services Interaction Styles" SERVICES COMPUTING, 2005 IEEE INTERNATIONAL CONFERENCE ON ORLANDO, FL, USA 11-15 JULY 2005, PISCATAWAY, NJ, USA,IEEE, 11 July 2005 (2005-07-11), pages 147-154, XP010852248 ISBN: 0-7695-2408-7 * the whole document * | 1-10 | TECHNICAL FIELDS SEARCHED (IPC) G06Q H04L |

-/--

The present search report has been drawn up for all claims

| Place of search | Date of completion of the search | Examiner |
|---|---|---|
| The Hague | 6 March 2008 | Fernández Ferreira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**European Patent Office**

Application Number

EP 07 01 4545

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABRAHAM S ET AL: "Enhancing Web Services Availability" E-BUSINESS ENGINEERING, 2005. ICEBE 2005. IEEE INTERNATIONAL CONFERENCE ON BEIJING, CHINA 12-18 OCT. 2005, PISCATAWAY, NJ, USA,IEEE, 12 October 2005 (2005-10-12), pages 352-355, XP010860478 ISBN: 0-7695-2430-3 * the whole document * | 1-10 | |
| A | TAI, KHALAF AND MIKALSEN: "Composition of Coordinated Web services" PROCEEDINGS OF THE ACM/IFIP/USENIX INTERNATIONAL CONFERENCE ON DISTRIBUTED SYSTEMS PLATFORMS (MIDDLEWARE 2004), TORONTO, CANADA, OCTOBER 2004, [Online] 18 October 2004 (2004-10-18), XP002471835 http://www.research.ibm.com/AEM/pubs/composition_middleware2004.pdf [retrieved on 2008-03-05] * the whole document * | 1-10 | TECHNICAL FIELDS SEARCHED (IPC) |

The present search report has been drawn up for all claims

| Place of search | Date of completion of the search | Examiner |
|---|---|---|
| The Hague | 6 March 2008 | Fernández Ferreira |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)